# EUROPÄISCHE PATENTSCHRIFT

(11) **EP 1 870 288 B1**
(45) Veröffentlichungstag und Bekanntmachung des Hinweises auf die Patenterteilung: **17.09.2008**
(21) Anmeldenummer: 06013023.4
(22) Anmeldetag: 23.06.2006
(51) Int. Cl.: B60R 16/02

(54) **Kabelbaum mit Kühlung**
Wire harness with cooling
Faisceau de câble avec refroidissement

(43) Veröffentlichungstag der Anmeldung: 26.12.2007
(73) Patentinhaber: Delphi Technologies, Inc., Troy, Michigan 48007 (US)
(72) Erfinder: Hombach, Frank, 51674 Wiehl (DE); Hupertz, Stefan, 57674 Olpe (DE); Noll, Diethelm, 57589 Birkenbaul (DE)
(74) Vertreter: Denton, Michael John

(56) Entgegenhaltungen:
- WO-A-20/04042744
- DE-A1- 3 642 307
- DE-A1- 10 012 950
- DE-A1- 19 921 310
- DE-C1- 4 209 928

## Beschreibung

Die vorliegende Erfindung beschäftigt sich mit der Kühlung von in einem Kraftfahrzeug eingebauten elektrischen Geräten.

Insbesondere bei hohen Außentemperaturen tritt in derartigen Geräten aufgrund des elektrischen Widerstands der in den Geräten eingebauten elektronischen Bauteile eine unerwünschte Hitzeentwicklung auf. Dies führt nicht nur zu unerwünschten Energieverlusten, sondern verkürzt auch die Lebensdauer des elektrischen Gerätes. Aus diesem Grund ist es üblich, derartige Geräte zu kühlen. Dabei sind verschiedene Vorgehensweisen bekannt, um in einem Fahrzeug eingebaute elektrische Geräte zu kühlen. Beispielsweise kann eine Kühlung mit Hilfe eines in einem Gehäuse des Gerätes eingebauten Ventilators realisiert werden. Durch den Einbau eines solchen Ventilators in das Gerätegehäuse wird allerdings der Energieverbrauch des Gerätes erhöht, die Herstellung des elektrischen Gerätes verteuert sich, und das Gerätevolumen wird vergrößert. In Anbetracht der hohen Anzahl von in heutigen Kraftfahrzeugen eingebauten elektrischen Geräten ist diese Vorgehensweise daher nicht befriedigend.

Andere Lösungen sehen ein Wärmerohr vor, über welches ein elektrisches Gerät mit einer Wärmesenke, beispielsweise einem Eisen- oder Stahlträger verbunden werden kann, um Wärme von dem Gerät abzuführen. Auch diese Lösung ist konstruktiv vergleichsweise aufwändig. WO-A-2004/042744 zeigt die Merkmale des Oberbegriffs des Anspruchs 1.

Der vorliegenden Erfindung liegt daher die Aufgabe zu Grunde, eine Möglichkeit zur Verfügung zu stellen, in einem Kraftfahrzeug eingebaute elektrische Geräte effizient und mit geringem Aufwand zu kühlen.

Diese Aufgabe wird durch den Gegenstand des Anspruchs 1 gelöst.

Erfindungsgemäß ist ein Kabelbaum für ein Kraftfahrzeug mit einem Stecker zum Anschließen eines in dem Kraftfahrzeug eingebauten elektrischen Gerätes an den Kabelbaum versehen, wobei durch den Stecker und den Kabelbaum ein Schlauch verläuft, über den das elektrische Gerät mit einem Kühlaggregat des Kraftfahrzeuges verbindbar ist.

Der Schlauch kann somit eine Verbindung zwischen dem elektrischen Gerät und dem Kühlaggregat herstellen. Bei dem Kühlaggregat kann es sich beispielsweise um eine Lüftung handeln, die ungekühlte oder von einer Klimaanlage temperierte Luft in den Fahrgastraum des Fahrzeuges bläst. Sobald die Lüftung oder die Klimaanlage des Kraftfahrzeuges in Betrieb genommen wird, wird durch den Schlauch Luft zu dem elektrischen Gerät geführt und dieses durch den Luftzug gekühlt. Ein besonders guter Kühleffekt wird dabei zwar erzielt, wenn die Lüftung mit einer Klimaanlage verbunden ist, da dann von der Klimaanlage gekühlte Luft durch den Schlauch zu dem zu kühlenden elektrischen Gerät geleitet wird. Aber auch bei Fahrzeugen ohne Klimaanlage wird bereits dadurch, dass Luft durch den Schlauch in das elektrische Gerät geblasen wird, ähnlich wie bei einer Kühlung mit Hilfe eines Ventilators eine zufrieden stellende Kühlung erzielt.

Es kann sich bei dem Kühlaggregat, mit dem das elektrische Gerät über den Schlauch verbindbar ist, auch um ein Klimaanlagenmodul handeln, an welches der Schlauch des erfindungsgemäßen Kabelbaumes direkt angeschlossen wird. Dadurch wird vermieden, dass die von der Klimaanlage bereit gestellte Luft sich bereits in der Lüftung des Fahrzeuges aufwärmt, bevor sie zur Kühlung des elektrischen Gerätes eingesetzt wird.

Unabhängig von der Beschaffenheit des Kühlaggregates spart die erfindungsgemäße Lösung nicht nur Platz und Kosten, sondern erhöht zudem den Energieverbrauch höchstens geringfügig. Die Montage des Schlauches an dem elektrischen Gerät erfolgt ohne zusätzlichen Aufwand, da der Schlauch in den ohnehin benötigten Stecker integriert ist. Zudem erübrigt sich eine Messung der Temperatur an dem zu kühlenden elektrischen Gerät, da das Kühlaggregat bei hohen Außentemperaturen unabhängig von der Kühlung elektrischer Geräte eingeschaltet wird, und die Gerätekühlung somit automatisch einsetzt.

Vorzugsweise ist der Schlauch thermisch isoliert, beispielsweise durch eine Ummantelung mit einem wärmedämmenden Material. Dadurch kann verhindert werden, dass die zur Kühlung zugeführte Luft sich bereits auf dem Weg von dem Kühlaggregat zu dem zu kühlenden elektrischen Gerät aufheizt.

Nach einer weiteren vorteilhaften Ausführungsform kann der Schlauch von Kabeln des Kabelbaumes umgeben sein. Dies hat den Vorteil, dass der Schlauch einerseits durch die elektrischen Kabel geschützt ist und andererseits die Kabel als (zusätzliche) thermische Isolation für den Schlauch dienen können.

Nach einer weiteren vorteilhaften Ausführungsform kann der Stecker in eine Anschlussbuchse eingesteckt sein, die im Bereich des Schlauchendes mit einem Durchlass versehen ist. Auf diese Weise kann sich der Schlauch noch etwas in den Durchlass hineinerstrecken oder aber die durch den Schlauch geführte Kühlluft kann durch den Durchlass der Anschlussbuchse in das Gehäuse des elektrischen Gerätes eintreten.

Im Folgenden soll die Erfindung anhand eines bevorzugten Ausführungsbeispiels und unter Bezugnahme auf die beigefügte Zeichnung genauer beschrieben werden.

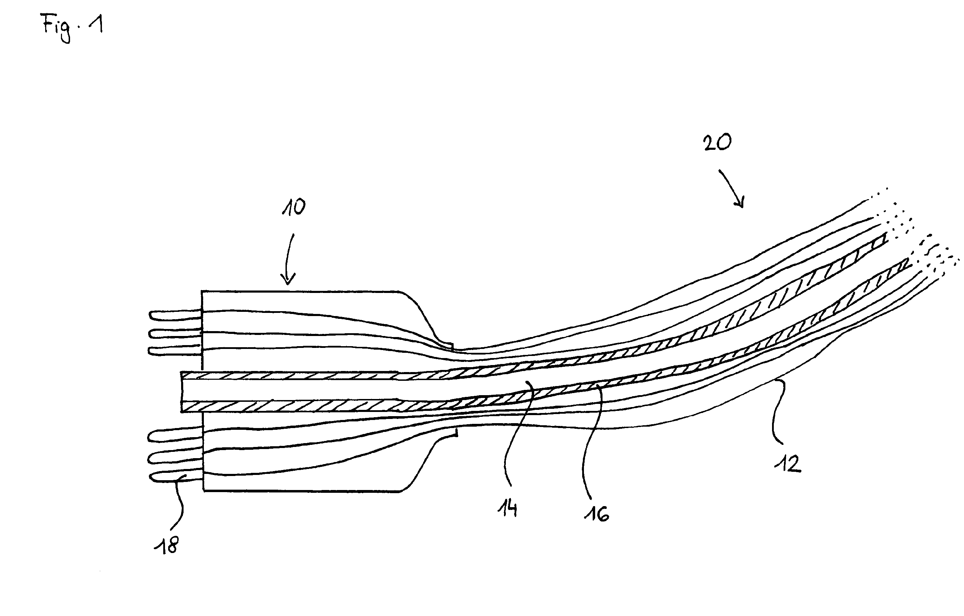

Fig. 1 zeigt einen Querschnitt durch einen schematisch dargestellten Kabelbaum mit einem Stecker.

Der Stecker 10 dient zum Anschließen eines in der Figur nicht dargestellten elektrischen Gerätes an ein Bordnetz eines Kraftfahrzeuges. Über Kontaktstifte 18 wird der elektrische Kontakt zwischen dem Stecker 10 und dem Gerät hergestellt. An seiner den Kontaktstiften 18 gegenüberliegenden Rückseite ist der Stecker 10 über elektrische Leiter 12 mit einem Kabelbaum 20 verbunden. Durch den Stecker 10 erstreckt sich ein flexibler Schlauch 14, der mit einer thermisch isolierenden Schicht 16 ummantelt ist. Der Schlauch 14 tritt an der Vorderseite des Steckers 10 zwischen den Kontaktstiften 18 aus, so dass über den Schlauch 14 Luft in ein an den Stecker angeschlossenes Gerät geblasen werden kann. An dem elektrischen Gerät ist zu diesem Zweck eine entsprechende Öffnung in eine zu dem Stecker 10 passende Anschlussbuchse integriert. Alternativ kann der Schlauch auch in einem neben den Kontaktstiften liegenden Bereich aus dem Stecker austreten. In diesem Fall können die Kontaktstifte in üblicher Weise angeordnet werden, und an dem elektrischen Gerät muss nur neben einer Anschlussbuchse, wie sie für bisher übliche Stecker auch verwendet wird, eine Öffnung für den Schlauch vorgesehen werden. Durch diese Öffnung wird dann bei angeschlossenem Stecker die von dem Schlauch zugeführte Luft in das Gerät geblasen. Der Schlauch 14 verlässt den Stecker 10 ebenso wie die elektrischen Leiter 12 an der Rückseite des Steckers 10 und ist mit den elektrischen Leitern 12 in den Kabelbaum 20 integriert. An seinem in der Figur nicht dargestellten anderen Ende kann der Schlauch 14 an ein Kühlaggregat, beispielsweise eine Lüftung oder eine Klimaanlage des Kraftfahrzeuges angeschlossen werden. Dabei kann der Schlauch 14 mit in der Figur nicht dargestellten Kabeln, über welche das Kühlaggregat an das Bordnetz angeschlossen ist, in dem Kabelbaum 20 zu dem Kühlaggregat geführt werden. Wenn das Kühlaggregat in Betrieb ist, wird somit gekühlte Luft durch den Schlauch 14 in das elektrische Gerät geführt.

### Bezugszeichenliste

- 10: Stecker
- 12: elektrischer Leiter
- 14: Schlauch
- 16: isolierende Ummantelung
- 18: Kontaktstift
- 20: Kabelbaum

## Patentansprüche

1. Kabelbaum (20) für ein Kraftfahrzeug mit einem Stecker (10) zum Anschließen eines in dem Kraftfahrzeug eingebauten elektrischen Gerätes an den Kabelbaum (20),
**dadurch gekennzeichnet, dass**
durch den Stecker (10) und den Kabelbaum (20) ein Schlauch (14) verläuft, über den das elektrische Gerät mit einem Kühlaggregat des Kraftfahrzeuges verbindbar ist.

2. Kabelbaum (20) nach Anspruch 1,
**dadurch gekennzeichnet, dass**
der Schlauch (14) mit einer thermisch isolierenden Ummantelung (16) versehen ist.

3. Kabelbaum (20) nach Anspruch 1 oder 2,
**dadurch gekennzeichnet, dass**
der Schlauch (14) von Kabeln (12) des Kabelbaumes (20) umgeben ist.

4. Kabelbaum (20) nach zumindest einem der vorstehenden Ansprüche 1 bis 3,
**dadurch gekennzeichnet, dass**
der Stecker (10) mit einer Anschlussbuchse verbunden ist, die im Bereich des Schlauchendes mit einem Durchlass versehen ist.

5. Kabelbaum (20) nach zumindest einem der vorstehenden Ansprüche,
**dadurch gekennzeichnet, dass**
das Kühlaggregat eine Lüftung ist.

6. Kabelbaum (20) nach zumindest einem der vorstehenden Ansprüche,
**dadurch gekennzeichnet, dass**
das Kühlaggregat ein Klimaanlagenmodul ist.

## Claims

1. Cable harness (20) for a motor vehicle, having a plug (10) for connecting an electrical appliance installed in the motor vehicle to the cable harness (20), **characterised in that** through the plug (10) and the cable harness (20) runs a hose (14) by which the electrical appliance can be connected to a cooling assembly of the vehicle.

2. Cable harness (20) according to claim 1, **characterised in that** the hose (14) is provided with a thermally insulating sheath (16).

3. Cable harness (20) according to claim 1 or 2, **characterised in that** the hose (14) is surrounded by cables (12) of the cable harness (20).

4. Cable harness (20) according to one or more of the preceding claims 1 to 3, **characterised in that** the plug (10) is connected to a connection socket which is provided with a passage in the region of the hose end.

5. Cable harness (20) according to one or more of the preceding claims, **characterised in that** the cooling assembly is a ventilation means.

6. Cable harness (20) according to one or more of the preceding claims, **characterised in that** the cooling assembly is an air conditioning system module.

## Revendications

1. Faisceau de câbles (20) pour un véhicule automobile, comprenant une prise (10) pour le raccordement d'un appareil électrique monté dans le véhicule automobile au faisceau de câbles (20),
**caractérisé en ce qu'**un tuyau souple (14) passe à travers la prise (10) et le faisceau de câbles (20), via lequel l'appareil électrique est susceptible d'être relié à une unité de refroidissement du véhicule automobile.

2. Faisceau de câbles (20) selon la revendication 1,
**caractérisé en ce que** le tuyau souple (14) est pourvu d'une enveloppe (16) thermiquement isolante.

3. Faisceau de câbles (20) selon la revendication 1 ou 2,
**caractérisé en ce que** le tuyau souple (14) est entouré par des câbles (12) du faisceau de câbles (20).

4. Faisceau de câbles (20) selon l'une au moins des revendications précédentes 1 à 3,
**caractérisé en ce que** la prise (10) est pourvue d'une douille de raccordement, laquelle est dotée d'une traversée dans la zone de l'extrémité du tuyau souple.

5. Faisceau de câbles (20) selon l'une au moins des revendications précédentes,
**caractérisé en ce que** l'unité de refroidissement est une ventilation.

6. Faisceau de câbles (20) selon l'une au moins des revendications précédentes,
**caractérisé en ce que** l'unité de refroidissement est un module d'installation de climatisation.
